# EUROPÄISCHE PATENTANMELDUNG

(11) **EP 4 379 875 A1**
(43) Veröffentlichungstag der Anmeldung: **05.06.2024**
(21) Anmeldenummer: 22210404.4
(22) Anmeldetag: 30.11.2022
(51) Int. Cl.: H01M 8/04007, H01M 8/04089, H01M 8/04082, H01M 8/04223, H01M 8/04701, H01M 10/66, B60H 1/00, B60H 1/32, F25B 17/12

(54) **VORRICHTUNG UND VERFAHREN ZUR TEMPERIERUNG EINES WASSERSTOFFBETRIEBENEN FAHRZEUGES**

(71) Anmelder: Siemens Mobility GmbH, 81739 München (DE)
(72) Erfinder: Danov, Vladimir, 91056 Erlangen (DE); Hammer, Thomas, 91334 Hemhofen (DE); Meinert, Michael, 91056 Erlangen (DE)
(74) Vertreter: Siemens Patent Attorneys

(57) **Zusammenfassung**

Es wird eine Vorrichtung zur Temperierung wenigstens eines Moduls (31, 32) eines wasserstoffbetriebenen Fahrzeuges vorgeschlagen, die einen Druckbehälter (1) zur Speicherung von Wasserstoff, eine Brennstoffzelle (5) zur Bereitstellung von elektrischer Energie für das Fahrzeug mittels des gespeicherten Wasserstoffes, ein erstes Leitungssystem (L1) für den Wasserstoff sowie ein zweites Leistungssystem (L2) für ein Wärmeübertragungsfluid umfasst, wobei die Vorrichtung weiterhin einen ersten und zweiten Sorptionsspeicher (11, 12) für Wasserstoff umfasst und dadurch gekennzeichnet, dass
- das erste Leitungssystem (L1) derart ausgebildet ist, dass ein serieller Durchfluss des Wasserstoffes durch den ersten und zweiten Sorptionsspeicher (11, 12) vor der Zuführung des Wasserstoffes zur Brennstoffzelle (5) möglich ist; wobei
- das zweite Leistungssystem (L2) zur thermischen Kopplung des ersten und zweiten Sorptionsspeichers (11, 12) mit dem Modul (31, 32) ausgebildet ist.

Weiterhin betrifft die Erfindung ein wasserstoffbetriebenes Schienenfahrzeug sowie ein Verfahren zur Temperierung wenigstens eines Moduls (31, 32) eines wasserstoffbetriebenen Fahrzeuges.

## Beschreibung

Die Erfindung betrifft eine Vorrichtung gemäß dem Oberbegriff des Patentanspruches 1, ein Schienenfahrzeug gemäß dem Oberbegriff des Patentanspruches 7 sowie ein Verfahren gemäß dem Oberbegriff des Patentanspruches 10.

Eine Möglichkeit für einen CO₂-emissionsfreien Betrieb von Zügen auf nicht elektrifizierten Strecken besteht in der Verwendung von Wasserstoff (H₂) als Energieträger. Hierbei wird der Wasserstoff beispielsweise mittels erneuerbarer Energien durch Elektrolyse gewonnen.

Eine bevorzugte Möglichkeit der Verwendung von Wasserstoff für den Betrieb von Zügen liegt in der Verstromung des Wasserstoffes durch Niedertemperatur-Brennstoffzellen, beispielswiese durch Polymer-Elektrolyt-Membran Brennstoffzellen oder Alkaline Brennstoffzellen. Hierbei kann die dabei bereitgestellte elektrische Energie für den Antrieb sowie gegebenenfalls für weitere Aggregate beziehungsweise Module des Schienenfahrzeuges, beispielsweise für sicherheitsrelevante Systeme, Klimatisierung, Heizung, Kühlung oder Lüftung verwendet werden.

Die energetische Effizienz der H₂-Verstromung sowie die nachfolgende Verwendung der dadurch bereitgestellten elektrischen Energie im Betrieb des Zuges ist entscheidend für seine ökologische Bilanz und seine Reichweite. Hierbei ist nicht nur der Fahrbetrieb zu berücksichtigen, sondern auch der Stillstand über längere Zeiten, beispielsweise nachts oder an Wochenenden. Typischerweise müssen hierbei mehrere Funktionen des Zuges aufrechterhalten werden (abgerüstet abgestellt), damit eine schnelle Wiederaufnahme des Fahrbetriebs sichergestellt werden kann.

Eine besondere technische Herausforderung sind hierbei niedrige Temperaturen unterhalb von 5 Grad Celsius, insbesondere Frost, bei denen ein Beheizen von kritischen Versorgungssystemen aus Frostschutzgründen, beispielsweise für die Wasserversorgung oder für einen zuverlässigen Betrieb von Batterien und Brennstoffzellen, erforderlich ist. Insbesondere bei längeren Abstellperioden werden die Züge komplett ohne Energieversorgung abgestellt (abgerüstet abgestellt). Dadurch ist eine Temperierung (Heizen, Kühlen) der Module/Aggregate/Komponenten des Zuges auf ihre jeweilige Betriebstemperatur erforderlich. Weiterhin kann ein Aufheizen oder Kühlen des Fahrgastraumes sowie der Fahrerkabine (Klimatisierung) erforderlich sein.

Nach dem Stand der Technik werden für die Temperierung von Zügen beziehungsweise ihrer Module elektrisch betriebene Hilfsaggregate verwendet. Beispielsweise werden zur Kühlung eine oder mehrere Kältemaschinen mit Propan als Kältemittel und einem elektrisch betriebenen Kompressor verwendet. Für eine Heizung eines oder mehrerer Module des Zuges werden elektrische Widerstandsheizungen sowie elektrisch beriebene Wärmepumpen verwendet. Die Wärmepumpen umfassen hierbei ebenfalls ein Kältemittel, typischerweise Propan oder Fluorkohlenwasserstoffe.

Der Bedarf an elektrischer Energie für ein Heizen oder Kühlen kann, je nach Umgebungsbedingungen, erheblich sein. Weiterhin weise die genannten Vorrichtungen zum Temperieren einen hohen Wartungsaufwand auf. Dadurch ist ein komplettes Abstellen von Zügen im abgerüsteten Zustand typischerweise in hierzu vorgesehenen Depots, beispielsweise verschattete und/oder beheizte Hallen, vorgesehen.

Der vorliegenden Erfindung liegt die Aufgabe zugrunde, die Temperierung eines wasserstoffbetriebenen Schienenfahrzeuges, insbesondere eines Zuges, zu verbessern.

Die Aufgabe wird durch eine Vorrichtung mit den Merkmalen des unabhängigen Patentanspruches 1, durch ein Schienenfahrzeug mit den Merkmalen des unabhängigen Patentanspruches 7 sowie durch ein Verfahren mit den Merkmalen des unabhängigen Patentanspruches 10 gelöst. In den abhängigen Patentansprüchen sind vorteilhafte Ausgestaltungen und Weiterbildungen der Erfindung angegeben.

Die erfindungsgemäße Vorrichtung zur Temperierung wenigstens eines Moduls eines wasserstoffbetriebenen Fahrzeuges, umfasst einen Druckbehälter zur Speicherung von Wasserstoff, eine Brennstoffzelle zur Bereitstellung von elektrischer Energie für das Fahrzeug mittels des gespeicherten Wasserstoffes, ein erstes Leitungssystem für den Wasserstoff sowie ein zweites Leistungssystem für ein Wärmeübertragungsfluid, wobei die Vorrichtung weiterhin einen ersten und zweiten Sorptionsspeicher für Wasserstoff umfasst. Die erfindungsgemäße Vorrichtung ist dadurch gekennzeichnet, dass
- das erste Leitungssystem derart ausgebildet ist, dass ein serieller Durchfluss des Wasserstoffes durch den ersten und zweiten Sorptionsspeicher vor der Zuführung des Wasserstoffes zur Brennstoffzelle möglich ist; wobei
- das zweite Leistungssystem zur thermischen Kopplung des ersten und zweiten Sorptionsspeichers mit dem Modul ausgebildet ist.

Das wasserstoffbetriebene Fahrzeug umfasst typischerweise mehrere Module, insbesondere Komponenten und/oder Aggregate, die gemäß ihres jeweiligen zulässigen Betriebstemperaturbereiches beheizt oder gekühlt werden. Insbesondere weist jedes Modul eine untere Betriebstemperatur auf, das heißt, dass die Temperatur des jeweiligen Moduls für seinen Betrieb oberhalb seiner unteren Betriebstemperatur liegen muss.

Eine Temperierung des Fahrzeuges beziehungsweise eines seiner Module kann eine Heizung oder Kühlung des Moduls sein.

Das wasserstoffbetriebene Fahrzeug ist beispielsweise als wasserstoffbetriebenes Schienenfahrzeug ausgebildet. Weiterhin kann das wasserstoffbetriebene Fahrzeug mehrere Schienenfahrzeuge im Verbund umfassen, das heißt als Zug ausgebildet sein.

Die Sorptionsspeicher sind typischerweise mit einem Sorptionsmittel (Sorptionsspeichermaterial) wenigstens teilweise gefüllte und als Wärmeübertrager ausgebildete Druckbehälter.

Typischerweise wird der Wasserstoff mittels des Druckbehälters bei einem Druck zwischen 100 bar und 700 bar gespeichert.

Die Brennstoffzelle dient zur Bereitstellung von elektrischer Energie für den Betrieb des Fahrzeuges mittels des gespeicherten Wasserstoffes. Die bereitgestellte elektrische Energie kann für den Betrieb des Fahrzeuges, beispielsweise für seinen Antrieb und/oder für den Betrieb seiner Module, verwendet werden.

Die erfindungsgemäße Vorrichtung umfasst zwei Leistungssysteme. Hierbei ist das erste Leistungssystem zur Führung/Leitung des Wasserstoffes vorgesehen. Das erste Leistungssystem kann als Wasserstoffgaskreis ausgebildet sein. Das zweite Leistungssystem kann als thermischer Kreislauf für das Wärmeübertragungsfluid ausgebildet sein.

Erfindungsgemäß ist das erste Leistungssystem derart ausgestaltet, dass ein serieller Durchfluss des Wasserstoffes durch den ersten und zweiten Sorptionsspeicher vor der Zuführung des Wasserstoffes zur Brennstoffzelle möglich ist.

Mit anderen Worten ist es durch die erfindungsgemäße Ausbildung des ersten Leitungssystems möglich, den Wasserstoff nicht nur durch den ersten und zweiten Sorptionsspeicher jeweils einzeln zu führen, sondern diesen auch nacheinander durch den ersten und zweiten Sorptionsspeicher oder nacheinander durch den zweiten und ersten Sorptionsspeicher zu führen. Dadurch wird ein flexiblerer und redundanterer Betrieb der Vorrichtung ermöglicht, sodass eine verbesserte Temperierung durch die erfindungsgemäß vorgesehene serielle Durchströmung der beiden Sorptionsspeicher erreicht wird.

Insbesondere ermöglicht die serielle Durchströmung eine gestufte Druckentspannung, bei der Wasserstoff, beispielsweise für den Betrieb der Brennstoffzelle, in Stufen freisetzbar ist. Dies ist insbesondere für einen Notbetrieb des Fahrzeuges vorteilhaft. Weiterhin kann dadurch eine schnellere Temperierung, beispielsweise ein schnelleres Heizen ermöglicht werden. Dies ist insbesondere für abgerüstete und abgestellte Schienenfahrzeuge beziehungsweise Züge vorteilhaft.

Die vorliegende Erfindung ermöglicht somit insbesondere eine flexiblere Verwendung von zwei Sorptionsspeichern mittels einer Druck- und temperaturgestuften Wasserstoffspeicherung und Wasserstoffabgabe (Wasserstoffausspeicherung). Dadurch wird die Kapazität bei gleichzeitig verbessertem Wirkungsgrad der Verwendung des Wasserstoffdruckes aus dem Druckbehälter sowie eine Temperierung, insbesondere Klimatisierung, von Zügen im Betrieb mit wechselseitiger Verwendung der Sorptionsspeicher für Wasserstoffaufnahme und Wasserstoffabgabe, verbessert. Die vorliegende Erfindung ist somit insbesondere für ein Heizen oder Kühlen abgestellter Züge bei niedriger beziehungsweise hoher Umgebungstemperatur oder einer Kältespeicherung vorteilhaft.

Zudem ermöglicht die vorliegende Erfindung eine Nutzung der Kälteenergie oder Wärmeenergie bei der Desorption beziehungsweise Adsorption des Wasserstoffes. Dadurch wird der Gesamtverbrauch von Wasserstoff aus dem Druckbehälter verringert, sodass eine Verbrauchs- und Kostenreduzierung im Betrieb des Fahrzeuges erreicht werden kann.

Das erfindungsgemäße wasserstoffbetriebene Schienenfahrzeug umfasst wenigstens ein zu temperierendes Modul und ist dadurch gekennzeichnet, dass dieses zur Temperierung des Moduls wenigstens eine Vorrichtung gemäß der vorliegenden Erfindung und/oder einer ihrer Ausgestaltungen umfasst.

Mit anderen Worten wird zur Temperierung des erfindungsgemäßen Schienenfahrzeuges wenigstens eine Vorrichtung gemäß der vorliegenden Erfindung und/oder einer ihrer Ausgestaltungen verwendet.

Das Schienenfahrzeug ist erfindungsgemäß wasserstoffbetrieben, das heißt, dass wenigstens ein Teil der für den Betrieb des Schienenfahrzeuges erforderlichen Energie, insbesondere elektrischen Energie, mittels Wasserstoff gewonnen wird. Der Betrieb umfasst hier insbesondere den Antrieb des Schienenfahrzeuges und/oder das Heizen und/oder Kühlen von Modulen und/oder den Betrieb weiterer Komponenten des Schienenfahrzeuges, beispielsweise von weiteren elektrischen Komponenten, insbesondere ebenfalls im Stillstand des Schienenfahrzeuges.

Es ergeben sich zur erfindungsgemäßen Vorrichtung gleichartige, gleichwertige und gleichwirkende Vorteile und/oder Ausgestaltungen des erfindungsgemäßen Schienenfahrzeuges.

Das erfindungsgemäße Verfahren zur Temperierung wenigstens eines Moduls eines wasserstoffbetriebenen Fahrzeuges, ist gekennzeichnet dadurch, dass zur Temperierung des Moduls eine Vorrichtung gemäß der vorliegenden Erfindung und/oder einer ihrer Ausgestaltungen verwendet wird.

Es ergeben sich zur erfindungsgemäßen Vorrichtung gleichartige, gleichwertige und gleichwirkende Vorteile und/oder Ausgestaltungen des erfindungsgemäßen Verfahrens.

Gemäß einer vorteilhaften Ausgestaltung der Erfindung ist das erste Leitungssystem derart ausgebildet, dass die Reihenfolge des Durchflusses des Wasserstoffes durch den ersten und zweiten Sorptionsspeicher umschaltbar ist.

Dadurch kann vorteilhafterweise die druckgestufte und temperaturgestufte Wasserstoffeinspeicherung oder Wasserstoffausspeicherung mittels der Sorptionsspeicher bezüglich der Sorptionsspeicher umgeschaltet werden. Beispielsweise wird dies durch mehrere Dreiwegeventile, die das erste Leistungssystem umfasst, und eine zugehörige Schaltung der genannten Ventile erreicht.

Es ist somit vorteilhaft, wenn in einer Weiterbildung der Erfindung das erste Leistungssystem zur Umschaltung der Reihenfolge wenigstens zwei Dreiwegeventile sowie ein zwischen den zwei Dreiwegeventilen angeordnetes regelbares Ventil umfasst.

Hierbei kann der Durchfluss des Wasserstoffes durch die Sorptionsspeicher bezüglich der Reihenfolge des Wasserstoffes durch die Sorptionsspeicher umgeschaltet werden. Weiterhin kann ebenfalls ein paralleles Durchströmen der Sorptionsspeicher vorgesehen sein.

In einer vorteilhaften Weiterbildung der Erfindung ist das zweite Leistungssystem derart ausgebildet, dass das Modul bezüglich der Sorptionsspeicher als Wärmesenke oder Wärmequelle verwendbar ist.

Mit anderen Worten kann das Modul als Wärmesenke oder als Wärmequelle thermisch eingebunden, das heißt thermisch mittels des zweiten Leistungssystems mit dem ersten Leitungssystem, insbesondere dem ersten und/oder zweiten Sorptionsspeicher, gekoppelt werden. Das Einbinden als Wärmesenke oder Wärmequelle kann mittels entsprechenden Dreiwegeventilen des zweiten Leistungssystems ermöglicht werden. Für die genannten thermischen Kopplungen können Wärmeübertrager vorgesehen sein. Insbesondere dienen die Sorptionsspeicher zur thermischen Kopplung des ersten und zweiten Leistungssystems, das heißt zur thermischen Kopplung des Wasserstoffes mit dem Wärmeübertragungsfluid des zweiten Leistungssystems. Die Sorptionsspeicher sind somit bevorzugt ebenfalls als Wärmeübertrager ausgebildet. Insgesamt wird dadurch die Vorrichtung bezüglich der Temperierung der Module flexibler, sodass ein Heizen oder Kühlen der jeweiligen Module möglich ist. Das ist deshalb von Vorteil, da die Module ihre Funktion je nach fahrzeuginternen und/oder fahrzeugexternen Bedingungen ändern können.

Gemäß einer bevorzugten Ausgestaltung der Erfindung umfassen/umfasst der erste und/oder zweite Sorptionsspeicher als Speichermaterial ein Metallhydrid.

Hierbei ist bevorzugt die chemische Zusammensetzung und/oder räumliche Ausbildung des Metallhydrids auf die zugehörigen Einsatztemperaturbereiche und Druckbereiche abgestimmt.

Für die vorliegende Erfindung vorteilhafte Metallhydride sind beispielsweise aus dem Dokument *"*Room Temperature Metal Hydrides for Stationary and Heat Storage Applications: A Review, Front. Energy Res., 9. April 2021" bekannt.

In einer vorteilhaften Weiterbildung der Erfindung weist das Metallhydrid höchstens eine Desorptionsenthalpie von 23 kJ/mol bei einer Wasserstoffbeladungskapazität von 15 Prozent auf.

Dadurch können vorteilhafte und für den Betrieb des Fahrzeuges typische Temperaturbereiche, beispielsweise von -20 Grad Celsius bis 85 Grad Celsius und Druckbereich, beispielswiese bis 100 bar (100 MPa), erreicht werden.

Gemäß einer vorteilhaften Ausgestaltung der Erfindung umfasst das Modul mehrere zu temperierende Teilmodule, und das zweite Leitungssystem ist derart ausgebildet, dass die Teilmodule bezüglich des Wärmeübertragungsfluids parallelgeschaltet sind.

Vorteilhafterweise wird durch die vorgesehene Parallelschaltung der Strömungswiderstand innerhalb des zweiten Leistungssystems verringert. Dadurch können eine oder mehrere Pumpen, die für den Betrieb des zweiten Leistungssystem vorgesehen sind, mit kleinerer Pumpleistung verwendet werden. Dadurch wird insbesondere der Bauraumbedarf für die Vorrichtung sowie die energetische Effizienz der Vorrichtung verbessert. Dies ist insbesondere für ein Schienenfahrzeug von Vorteil. Weiterhin wird durch die Parallelschaltung eine Flexibilität bezüglich der Verwendung der Teilmodule bereitgestellt. Zudem können vorteilhafterweise die Temperaturen der Module unabhängig voneinander eingestellt werden.

In einer vorteilhaften Weiterbildung der Erfindung umfasst das Modul eine oder mehrere Batterien, insbesondere eine Traktionsbatterie und/oder eine Bordnetzbatterie, eine oder mehrere Brennstoffzellen, eine oder mehrere Wasserversorgungssysteme eine oder mehrere Klimatisierungsanlagen, eine oder mehrere leistungselektronische Konverter, eine oder mehrere Wärmepumpen und/oder eine oder mehrere Widerstandsheizungen.

Vorteilhafterweise können dadurch typische Module/Komponenten/Aggregate/Systeme eines Schienenfahrzeuges thermisch eingebunden werden. Das jeweilige Teilmodul kann hierbei einstellbar als Wärmesenke oder Wärmquelle thermisch eingebunden, das heißt über das zweite Leitungssystem mit den Sorptionsspeichern thermisch gekoppelt werden. Die thermischen Kopplungen zwischen den Teilmodulen und dem zweiten Leitungssystem beziehungsweise dem Wärmeübertragungsfluid können mittels flüssig-flüssig Wärmeübertragern, beispielsweise für ein Wasserversorgungsmodul eines Schienenfahrzeuges, und/oder mittels flüssig-gas Wärmeübertragern, beispielsweise für eine Klimatisierung eines Schienenfahrzeuges, ausgebildet werden.

Gemäß einer vorteilhaften Ausgestaltung der Erfindung wird der Wasserstoff so lange über den ersten Sorptionsspeicher geleitet, bis die Temperatur des Moduls oberhalb seiner unteren Betriebstemperatur ist oder bis die Brennstoffzelle ihren Betrieb aufnimmt.

Dieses Betriebsverfahren der Vorrichtung wird vorliegend als erster Zyklus bezeichnet und ist insbesondere zur Heizung abgestellter Züge vorteilhaft.

Für das Verfahren gemäß dem genannten ersten Zyklus weisen die Sorptionsspeicher eine gespeicherte Wasserstoffmenge auf, welche bei Mindestbetriebstemperatur dem Mindestbetriebsdruck der Brennstoffzelle entspricht. Mit anderen Worten sind die Sorptionsspeicher derart gefüllt, dass ein Betrieb der Brennstoffzelle mit ihrer Mindesttemperatur und ihrem zugehörigen Mindestdruck mittels des ausgespeicherten Wasserstoffes möglich ist. Hierbei haben als Ausgangspunkt des ersten Zyklus die Module ebenfalls ihre untere Betriebstemperatur erreicht, beispielsweise durch Wärmeverluste an die Umgebung des abgestellten Schienenfahrzeuges.

Gemäß dem ersten Zyklus wird Wasserstoff aus dem Druckbehälter zum ersten Sorptionsspeicher geleitet. Hierbei wird die Rate derart eingestellt, dass die Wärmeverluste des Moduls und des ersten Sorptionsspeichers geringfügig überkompensiert werden. Dadurch steigen die Temperaturen langsam an.

Der erste Zyklus wird beendet, wenn die Temperaturen der Module oberhalb ihrer unteren Betriebstemperaturen liegen. Hierbei kann die jeweilige untere Betriebstemperatur der Module verschieden sein. Weiterhin kann für das Beenden des ersten Zyklus ein Mindestabstand zur unteren Betriebstemperatur vorgesehen sein. Der erste Zyklus kann wieder aufgenommen werden, wenn eines der Module durch Wärmeverluste seine untere Betriebstemperatur wieder erreicht, oder wenn das Schienenfahrzeug seinen Betrieb mit dem Start des Betreibens der Brennstoffzelle aufnimmt. Das ist deshalb der Fall, da dann die Brennstoffzelle (nicht mehr die Sorptionsspeicher) als Wärmequelle zum Heizen der Module vorgesehen ist. Der erste Zyklus kann weiterhin mit dem Start eines zweiten Zyklus enden, wenn bei der erhöhten Temperatur der Druck im ersten Sorptionsspeicher einen festgelegten ersten Druckwert erreicht.

In einer vorteilhaften Weiterbildung der Erfindung wird der Wasserstoff so lange seriell über den ersten und zweiten Sorptionsspeicher geleitet, bis die Temperatur des Moduls oberhalb seiner unteren Betriebstemperatur ist oder bis die Brennstoffzelle ihren Betrieb aufnimmt (zweiter Zyklus).

Gemäß dem zweiten Zyklus, der sich dem ersten Zyklus zeitlich anschließen kann, wird der Wasserstoff durch das erfindungsgemäß ausgebildete erste Leistungssystem seriell über beide Sorptionsspeicher geleitet. Mit anderen Worten sind innerhalb des zweiten Zyklus die Sorptionsspeicher bezüglich des Wasserstoffes in Reihe geschaltet. Für den ersten Zyklus wird im Gegensatz zum zweiten Zyklus lediglich der erste Sorptionsspeicher verwendet. Die Rate für den ersten Sorptionsspeicher wird hierbei derart eingestellt, beispielsweise durch ein Steuern oder Regeln, dass dieser Wasserstoff mit einer Rate aufnimmt, die gerade ausreicht, um Wärmeverluste an die Umgebung zu kompensieren. Dadurch kann die Temperatur gerade so oberhalb der unteren Betriebstemperaturen der Module beziehungsweise oberhalb der höchsten unteren Betriebstemperaturen der Module gehalten werden.

Analog zum ersten Zyklus wird die Wasserstoffaufnahme beziehungsweise Rate der Wasserstoffaufnahme des zweiten Sorptionsspeichers derart gesteuert oder geregelt, dass die Wärmeverluste der Module und des zweiten Sorptionsspeichers leicht überkompensiert werden. Dadurch steigen die Temperaturen der Module wiederum langsam an. Dies erfolgt so lange, bis die Temperatur der Module oberhalb der höchsten unteren Betriebstemperatur ist.

Der zweite Zyklus wird bevorzugt beendet, wenn das Schienenfahrzeug seinen Betrieb mit dem Start der Brennstoffzelle aufnimmt, die dann als Wärmequelle verwendet werden kann. Weiterhin kann der zweite Zyklus mit der Aufnahme eines der Beheizung wichtiger Funktionen dienenden Notbetriebes enden. Das erfolgt, wenn bei der erhöhten und erreichten Temperatur der Druck innerhalb des zweiten Sorptionsspeichers einen zweiten Druckwert erreicht hat.

Gemäß einer vorteilhaften Ausgestaltung der Erfindung weist die Brennstoffzelle ein Niederlastmodul auf, wobei der erste und/oder zweite Sorptionsspeicher wenigstens durch die Abwärme des Niederlastmoduls wenigstens teilweise entladen werden, wobei der dabei bereitgestellte Wasserstoff für den Betrieb des Niederlastmoduls verwendet wird.

Vorteilhafterweise wird dadurch ein Notbetrieb des Schienenfahrzeuges ermöglicht, wobei der zweite Zyklus mit der Aufnahme des genannten Notbetriebs beendet wird. Für den Notbetrieb kann die Brennstoffzelle modular ausgebildet sein, das heißt ein Leistungsmodul für den normalen Betrieb und ein Niederlastmodul für den Notbetrieb, beispielsweise für den Betrieb von Hilfsaggregaten, umfassen.

Für den Notbetrieb wird das Niederlastmodul der Brennstoffzelle betrieben beziehungsweise in Betrieb genommen. Der hierzu erforderliche Wasserstoff wird durch eine gestufte Druckentspannung der Sorptionsspeicher zur Verfügung gestellt. Das Niederlastmodul beziehungsweise die Brennstoffzelle werden für den Notbetrieb als Wärmequelle verwendet, die wenigstens den ersten Sorptionsspeicher beheizt und somit zu einem Druckaufbau und einer Wasserstoffabgabe beziehungsweise Wasserstoffausspeicherung führt. Reicht dies nicht mehr für die Freisetzung von Wasserstoff aus, wird das erste Leitungssystem derart umgeschaltet, dass die Reihenfolge des ersten und zweiten Sorptionsspeichers bezüglich des Wasserstoffes getauscht werden. Durch dieses Umschalten der Ventile im Wärmekreislauf wird die Wärmequelle mit dem zweiten Sorptionsspeicher thermisch verbunden, sodass durch Beheizung jetzt der zweite Sorptionsspeicher Wasserstoff abgibt und der Brennstoffzelle auf dem Weg über den ersten Sorptionsspeicher zur Verfügung stellt. Dadurch bildet sich der Vorteil aus, dass die jeweils nicht wasserstoffabgebenden Sorptionsspeicher nicht auskühlen.

In einer vorteilhaften Weiterbildung der Erfindung umfasst das Modul eine Klimatisierungsanlage, wobei die beim Einspeichern des Wasserstoffes mittels des ersten und/oder zweiten Sorptionsspeicher erzeugte Wärme durch die Klimatisierungsanlage an die Umgebungsluft abgegeben wird.

Vorteilhafterweise wird dadurch eine Kältespeicherung ausgebildet beziehungsweise bereitgestellt. Dies ist insbesondere für abgestellte Züge in Klimaten mit hohen Tag-Nacht-Unterschieden der Temperatur von Vorteil. Hierbei erfolgt somit eine gestufte, beispielsweise nächtliche Wasserstoffeinspeicherung mittels der ersten und zweiten Sorptionsspeicher in Analogie zum ersten und/oder zweite Zyklus, wobei die Wärme nun an die Umgebungsluft abgegeben wird. Eine Ausspeicherung zur Kühlung des Schienenfahrzeuges kann dann am folgenden Tag erfolgen.

Mit anderen Worten kann eine Vorbereitung des Betriebes abgerüstet abgestellter Schienenfahrzeuge analog des ersten und/oder zweiten Zyklus erfolgen, wobei hierbei die Rate derart eingestellt, gesteuert oder geregelt wird, dass die Wärmeverluste der Module und der Sorptionsspeicher nicht nur geringfügig, sondern deutlich überkompensiert werden. Dadurch steigen die Temperaturen schnell an.

Gemäß einer vorteilhaften Ausgestaltung der Erfindung werden der erste und zweite Sorptionsspeicher hierbei wechselseitig beladen.

Dadurch werden die Sorptionsspeicher vorteilhafterweise zur Kühlung beziehungsweise nach Abstellung bei wärmeren Außentemperaturen verwendbar. Hierzu erfolgen eine wechselseitige Druckbeladung und Entladung der Sorptionsspeicher. Dies wird wiederum durch die erfindungsgemäße Ausbildung des ersten Leistungssystems ermöglicht. Zur Kühlung wird die Wärme, beispielsweise mittels eines Luft-Flüssig-Wärmeübertragers, wiederum an die Umgebung des Schienenfahrzeuges abgegeben. Die abgekühlte Luft kann zur Klimatisierung, vorliegend zur Kühlung, einer oder mehrerer Fahrgasträume verwendet werden. Weitere Wärme kann von Batterien, Leistungselektronik, Brennstoffzellen, und/oder weiteren Komponenten bereitgestellt werden.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: eine Vorrichtung gemäß einer Ausgestaltung der vorliegenden Erfindung;
- Figur 2: eine Verschaltung mehrerer Teilmodule zu einem gemeinsamen Modul;
- Figur 3: ein Diagramm bezüglich einer spezifischen Beladung eines Metallhydrid-Speichermaterials; und
- Figur 4: ein weiteres Diagramm bezüglich einer spezifischen Beladung eines weiteren Metallhydrid-Speichermaterials.

Gleichartige, gleichwertige oder gleichwirkende Elemente können in einer der Figuren oder in den Figuren mit denselben Bezugszeichen versehen sein.

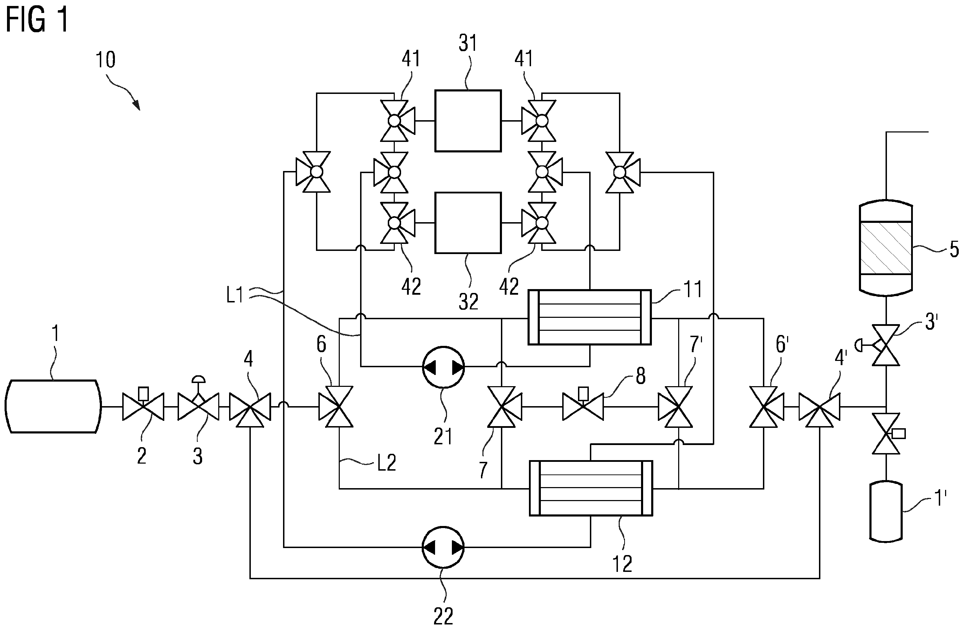

Die Figur 1 zeigt exemplarisch und schematisiert eine Vorrichtung 10 gemäß einer Ausgestaltung der vorliegenden Erfindung. Die Vorrichtung 10 ist zur Temperierung eines oder mehrere Module 31, 32 eines wasserstoffbetriebenen Fahrzeuges vorgesehen ist.

Die Vorrichtung 10 kann Bestandteil eines Schienenfahrzeuges, insbesondere eines Zuges sein, und dort zur Temperierung beziehungsweise zum Kühlen und/oder Heizen von Modulen des Schienenfahrzeuges verwendet werden. Hierbei kann die Vorrichtung 10 dazu dienen abgerüstete oder nicht abgerüstete beziehungsweise aufgerüstete abgestellte Züge energieeffizient zu heizen und/oder zu kühlen sowie betriebsfähig zu halten und/oder diese im Betrieb zu temperieren (kühlen oder heizen) .

Die Vorrichtung 10 umfasst einen Druckbehälter 1 zur Speicherung von Wasserstoff in einem Druckbereich von beispielsweise 100 bar bis 700 bar, insbesondere 350 bar, sowie eine Brennstoffzelle 5, die mittels des gespeicherten Wasserstoffes elektrische Energie bereitstellen kann. Die Vorrichtung 10 kann zudem einen Puffertank 1' für den Wasserstoff umfassen.

Weiterhin umfasst die Vorrichtung 10 einen ersten Sorptionsspeicher 11 sowie einen zweiten Sorptionsspeicher 12. Die Sorptionsspeicher 11, 12 sind wenigstens teilweise mit einem festen Wasserstoff-Sorptionsmittel befüllt und als Wärmeübertrager sowie als Druckbehälter ausgebildet. Weiterhin umfasst die Vorrichtung 10 ein erstes Leistungssystem L1 für den Wasserstoff sowie ein zweites Leistungssystem L2 für ein Wärmeübertragungsfluid.

Der erste und zweite Sorptionsspeicher 11, 12 sind jeweils mit dem Wärmeübertragungsfluid und somit mit dem zweiten Leitungssystem L2 thermisch gekoppelt. Hierbei weist das zweite Leitungssystem L2 einen ersten und zweiten thermischen Teilkreislauf auf, wobei der erste Sorptionsspeicher 11 in dem ersten thermischen Teilkreislauf eingebunden ist und der zweite Sorptionsspeicher 12 in den zweiten thermischen Teilkreislauf eingebunden ist. Für den Betrieb des ersten thermischen Teilkreislaufes ist eine erste Pumpe 21 vorgesehen. Für den Betrieb des zweiten thermischen Teilkreislaufes ist eine zweite Pumpe 22 vorgesehen. Die Teilkreisläufe des zweiten Leistungssystems L2 ermöglichen es, dass die Sorptionsspeicher 11, 12 mit einer Wärmesenke 31 (wärmeaufnehmend) oder mit einer Wärmequelle 32 (wärmeabgebend) thermisch gekoppelt werden können, wobei dies einstellbar ist. Dadurch ist das zweite Leistungssystem L2 zur thermischen Kopplung des ersten und zweiten Sorptionsspeichers mit dem Modul ausgebildet, wobei das Modul als Wärmesenke 31 oder als Wärmequelle 32 koppelbar beziehungsweise einbindbar ist.

Das erste Leitungssystem L1 bildet einen Wasserstoff-Gaskreislauf aus. Dieser umfasst ebenfalls die Sorptionsspeicher 11, 12 sowie zwei Dreiwegeventile 7, 7' und ein regelbares Ventil 8. Zudem umfasst dieser ein weiteres regelbares Ventil 2, ein druckreduzierendes Ventil 3 sowie weitere Dreiwegeventile 4, 4', 6, 6', durch welche der Wasserstoff-Druckbehälter 1 direkt oder über die Sorptionsspeicher 11, 12 mit der Brennstoffzelle 5 verbunden werden kann. Der Betriebsdruck der Brennstoffzelle 5 kann durch ein weiteres druckreduzierendes Ventil 3' eingestellt werden.

Die Dreiwegeventile 7, 7' und das regelbare Ventil 8 ermöglichen es, dass die Sorptionsspeicher 11, 12 je nach Stellung der Dreiwegeventile 6, 6' in verschiedener Reihenfolge (11→12 oder 12→11) in Serie geschaltet werden können. Dadurch ist das erste Leistungssystem L1 dazu ausgebildet einen seriellen Durchfluss des Wasserstoffes durch den ersten und zweiten Sorptionsspeicher 11, 12 oder durch den zweiten und ersten Sorptionsspeicher 11, 12 vor der Zuführung des Wasserstoffes zur Brennstoffzelle 5 zu ermöglichen.

Die Vorrichtung 10 ermöglicht beispielsweise folgende bevorzugte Betriebe beziehungsweise Betriebsverfahren:

### 1. Heizungsverfahren von Versorgungssystemen abgestellter Züge (Heizungsverfahren der Stufe I)

a) Ausgangspunkt: Mittels der Sorptionsspeicher 11, 12 ist jeweils wenigstens die Wasserstoffmenge gespeichert, die bei Mindestbetriebstemperatur dem Mindestbetriebsdruck der Brennstoffzelle 5 entspricht. Die Module 31, 32 in der Wärmesenke 31 haben aufgrund ihres Wärmeverlustes an die Umgebung ihre untere Betriebstemperatur erreicht.
b) Erster Zyklus: Mittels des ersten Sorptionsspeichers 11 wird durch Einleitung von Wasserstoff aus dem Druckbehälter 1 über die Ventile 2, 3, 4 und 6 Wasserstoff gespeichert. Hierbei wird die Sorptionsrate derart eingestellt, dass die Wärmeverluste der Wärmesenke 31 und des ersten Sorptionsspeichers 11 leicht überkompensiert werden. Dadurch steigen die Temperaturen langsam an. Die für den Wärmetransport erforderliche erste Pumpe 21 wird beispielsweise mittels einer Batterie, insbesondere einer Traktionsbatterie und/oder Bordnetzbatterie, betrieben, sobald die Temperatur des ersten Sorptionsspeichers 11 um eine festgelegte Temperaturdifferenz, beispielsweise 10 Kelvin, oberhalb der höchsten Temperatur in der Wärmesenke 31 liegt.

Der beschriebene Heizzyklus wird unterbrochen, wenn alle Temperaturen in der Wärmesenke 31 um mindestens einen festgelegten Temperaturbetrag oberhalb der unteren Betriebstemperaturen der entsprechenden Module 31, 32 liegen. Hierbei können die Module 31, 32 verschiedene unteren Betriebstemperaturen aufweisen. Der Heizzyklus wird wieder aufgenommen, wenn eine der Temperaturen in der Wärmesenke 31 die eine der untere Betriebstemperaturen erreicht.

Der erste Zyklus wird bevorzugt beendet, wenn der Zug seinen Betrieb mit dem Start der Brennstoffzelle 5 aufnimmt, die dann als Wärmequelle zur Verfügung steht. Der erste Zyklus kann weiterhin mit dem Start eines zweiten Zyklus enden, wenn bei der festgelegten Temperaturdifferenz und der damit erhöhten Temperatur der Druck im ersten Sorptionsspeicher 11 einen festgelegten Schwellenwert p_{11/1} erreicht hat.

c) Zweiter Zyklus: Es erfolgt eine Wasserstoffspeicherung auf den über die Dreiwegeventile 7, 7' sowie das regelbare (druck mindernde) Ventil 8 in Reihe geschalteten ersten und zweiten Sorptionsspeichern 11, 12. Hierzu wird der Wasserstoff aus dem Druckbehälter 1 über die Ventile 2, 3, 4 und 6 in die Sorptionsspeicher 11, 12 eingeleitet. Hierbei ist die Wärmesenke 31 thermisch mit dem zweiten Sorptionsspeicher 12 gekoppelt. Weiterhin werden die Drucke derart eingestellt, gesteuert oder geregelt, dass der erste Sorptionsspeicher 11 mit einer Rate beladen wird, die gerade ausreichend ist, Wärmeverluste an die Umgebung zu kompensieren, und so seine Temperatur oberhalb einer unteren Betriebstemperatur zu halten, die beispielsweise der unteren Betriebstemperatur der Wärmesenke 31 entspricht (Das ist die höchste der unteren Betriebstemperaturen der Module 31, 32 in der Wärmesenke 31).

Die Wasserstoffaufnahme des zweiten Sorptionsspeichers 12 wird analog zum ersten Zyklus gesteuert, sodass die Wärmeverluste der Wärmesenke 31 und des zweiten Sorptionsspeichers 12 leicht überkompensiert werden. Dadurch steigen die Temperaturen langsam an. Die für den Wärmetransport erforderliche zweite Pumpe 22 wird wiederum mittels einer Batterie, beispielsweise einer Traktionsbatterie und/oder Bordnetzbatterie, betrieben, sowie die Temperatur des zweiten Sorptionsspeichers 12 um eine festgelegte Temperaturdifferenz, beispielsweise 10 Kelvin, oberhalb der höchsten Temperatur in der Wärmesenke 31 liegt.

Der beschriebene Heizzyklus wird unterbrochen, wenn alle Temperaturen in der Wärmesenke 31 um mindestens einen festgelegten Temperaturbetrag oberhalb der unteren Betriebstemperaturen der entsprechenden Module 31, 32 liegen. Hierbei können die Module 31, 32 verschiedene unteren Betriebstemperaturen aufweisen. Der Heizzyklus wird wieder aufgenommen, wenn eine der Temperaturen in der Wärmesenke 31 eine der untere Betriebstemperatur erreicht hat.

Der zweite Zyklus wird bevorzugt beendet, wenn der Zug seinen Betrieb mit dem Start der Brennstoffzelle 5 aufnimmt, die dann als Wärmequelle zur Verfügung steht. Der zweite Zyklus kann weiterhin mit der Aufnahme eines Notbetriebes enden, wenn bei der festgelegten Temperaturdifferenz und der damit erhöhten Temperatur der Druck im zweiten Sorptionsspeicher 12 einen festgelegten Schwellenwert p_{12/2} erreicht hat.

d) Notbetrieb: Bevorzugt wird hierzu ein Niederlastmodul der Brennstoffzelle 5 in Betrieb genommen. Der dafür erforderliche Wasserstoff wird durch gestufte Druckentspannung der Sorptionsspeicher 11, 12 bereitgestellt. Hierzu werden die Ventile 6', 4' und das Druckregelventil 3' entsprechend eingestellt. Das Niederlastmodul dient in diesem Betriebsfall als Wärmequelle 32, welche den ersten Sorptionsspeicher 11 beheizt und damit für einen entsprechenden Druckaufbau und eine entsprechende Wasserstoffausspeicherung dient. Wenn der Druckaufbau nicht mehr ausreicht, um Wasserstoff auf dem Weg über den zweiten Sorptionsspeicher 12 an die Brennstoffzelle 5 beziehungsweise das Niederlastmodul abzugeben, wird durch Umschalten der Ventile 6', 7 und 7' die Reihenfolge der Sorptionsspeicher 11, 12 getauscht. Durch ein weiteres Umschalten der Ventile innerhalb des zweiten Leistungssystem L2 (Wärmekreislauf) wird die Wärmequelle 32 mit dem zweiten Sorptionsspeicher 12 thermisch gekoppelt, sodass durch Beheizung jetzt der zweite Sorptionsspeichers 12 Wasserstoff abgibt und der Brennstoffzelle 5 beziehungsweise dem Niederlastmodul über den ersten Sorptionsspeichers 11 zur Verfügung stellt. Dadurch ergibt sich der Vorteil, dass die jeweils nicht wasserstoffabgebenden Sorptionsspeicher 11, 12 nicht auskühlen.

e) Kältespeicherung: Die Kältespeicherung betrifft bevorzugt in Klimaten mit hohen Tag-Nacht-Temperaturunterschieden abgestellte Züge. Zur Kältespeicherung erfolgte eine gestufte nächtliche Wasserstoffeinspeicherung in die Sorptionsspeicher 11, 12 analog zum ersten und zweiten Zyklus, wobei die Wärme an die Umgebungsluft abgegeben wird. Die Ausspeicherung zur Kühlung erfolgt dann gemäß des im Folgenden erläuterten Vorbereitungsverfahrens am nächsten Tag.

### 2. Vorbereitungsverfahren des Betriebs abgerüstet abgestellter Züge (Heizungsverfahren der Stufe II)

a) Ausgangspunkt für das Vorbereitungsverfahren ist das Heizungsverfahren der Stufe I.
b) Erster Zyklus: Es erfolgt eine Wasserstoffspeicherung mittels des ersten Sorptionsspeichers 11 durch ein Einleiten des Wasserstoffes aus dem Druckbehälter 1 über die Ventile 2, 3, 4 und 6. Hierbei wird die Sorptionsrate beziehungsweise Speicherrate derart eingestellt, dass die Wärmeverluste der Wärmesenke 31 und des ersten Sorptionsspeichers 11 deutlich überkompensiert werden. Dadurch steigen die Temperaturen schneller als die Temperaturen im ersten Zyklus des Heizungsverfahrens der Stufe I an. Die für den Wärmetransport erforderliche erste Pumpe 21 wird wiederum mittels einer Batterie, insbesondere einer Traktionsbatterie und/oder Bordnetzbatterie, betrieben, sowie die Temperatur des ersten Sorptionsspeichers 11 um eine festgelegte Temperaturdifferenz, beispielsweise 10 Kelvin, oberhalb der höchsten Temperatur in der Wärmesenke 31 liegt.

Der beschriebene Heizzyklus wird unterbrochen, wenn alle Temperaturen in der Wärmesenke 31 um mindestens einen festgelegten Temperaturbetrag oberhalb der unteren Betriebstemperaturen der entsprechenden Module 31, 32 liegen. Hierbei können die Module 31, 32 verschiedene unteren Betriebstemperaturen aufweisen. Der Heizzyklus wird wieder aufgenommen, wenn eine der Temperaturen in der Wärmesenke 31 eine der untere Betriebstemperatur erreicht. Der erste Zyklus wird bevorzugt beendet, wenn der Zug seinen Betrieb mit dem Start der Brennstoffzelle 5 aufnimmt, die dann als Wärmequelle zur Verfügung steht. Der erste Zyklus kann weiterhin mit dem Start des zweiten Zyklus enden, wenn bei der festgelegten Temperaturdifferenz und der damit erhöhten Temperatur der Druck im ersten Sorptionsspeicher 11 einen festgelegten Schwellenwert p_{11/1} erreicht hat.

c) Zeiter Zyklus: Der zweite Zyklus des Heizungsverfahrens der Stufe II wird analog zum zweiten Zyklus des Heizungsverfahrens der Stufe I durchgeführt.

3. Kühlungsverfahren: Hierbei werden die Sorptionsspeicher 11, 12 zur Kühlung, beispielsweise im Sommer und/oder nach Abstellung des Zuges bei wärmeren Außentemperaturen verwendet. Die Kühlung erfolgt durch eine wechselseitige Druckbeladung und Entladung der Sorptionsspeicher 11, 12, wobei die Wärmesenke 31 bei der Beladung durch die Umgebungsluft gebildet wird. Hierbei wird ein Luft-Flüssig-Wärmeübertrager verwendet, wobei die aufgeheizte Luft an die Umgebung abgegeben wird. Die Wärmequelle 32 ist ebenfalls Umgebungsluft, die nach der Abkühlung über einen Luft-Flüssig-Wärmeübertrager zur Kühlung, beispielsweise zur Klimatisierung von Fahrgasträumen, dient. Weitere Wärme könnte von Batterien, Leistungselektroniken, Brennstoffzellen und weiteren Komponenten bereitgestellt werden.

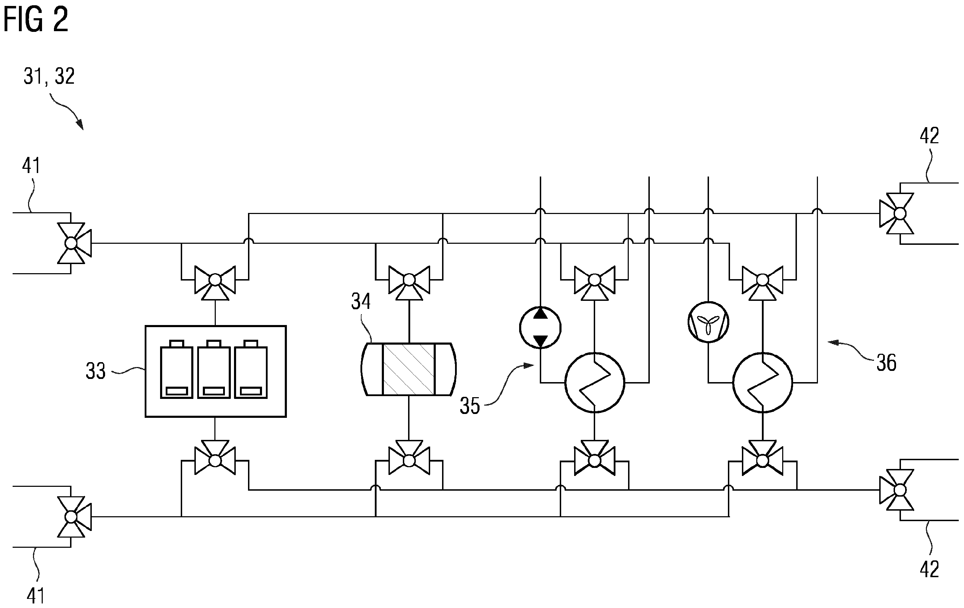

Die Figur 2 zeigt eine Verschaltung mehrerer Teilmodule 33,...,36 zu einem gemeinsamen Modul 31, 32.

Hierbei können die in Figur 1 dargestellte Wärmesenke 31 und die Wärmequelle 32 bevorzugt folgende Teilmodule 33,...,36 umfassen: Eine Batterie 33, beispielsweise eine Traktionsbatterie und/oder Bordnetzbatterie, eine Brennstoffzelle 34, eine beispielsweise über einen flüssig-flüssig Wärmeübertrager gekoppelte Wasserversorgung 35 des Zuges, und/oder eine über beispielsweise einen flüssig-gas Wärmeübertrager 27 gekoppelte Klimatisierung 37 des Zuges.

Weitere Teilmodule 33,...,36 können als Wärmesenke 31 oder Wärmequelle vorgesehen sein, beispielsweise leistungselektronische Konverter, Wärmepumpen und/oder Widerstandsheizungen. Die Figur verdeutlicht, dass die Teilmodule 33,...,36 ihre Funktion je nach Betriebsbedingungen ändern können.

Durch Umschalten/Einstellen der jeweiligen dargestellten Dreiwegeventile können die Teilmodule 33,...,36 über die weitere Dreiwegeventile 41 in das zweite Leitungssystem L2 als Wärmesenke 31 oder über weitere Dreiwegeventile 42 als Wärmequelle 32 eingebunden werden.

Zur Reduzierung des Strömungswiderstandes und damit zur Verringerung der erforderlichen Pumpleistungen der Pumpen 21, 22, sind die Teilmodule 33,...,36 innerhalb der Wärmesenke 31 und Wärmequelle 32 thermisch/fluidmechanisch parallelgeschaltet. Die Parallelschaltung hat den weiteren Vorteil, dass die Temperaturen der Teilmodule 33,...,36 unabhängig voneinander eingestellt werden können.

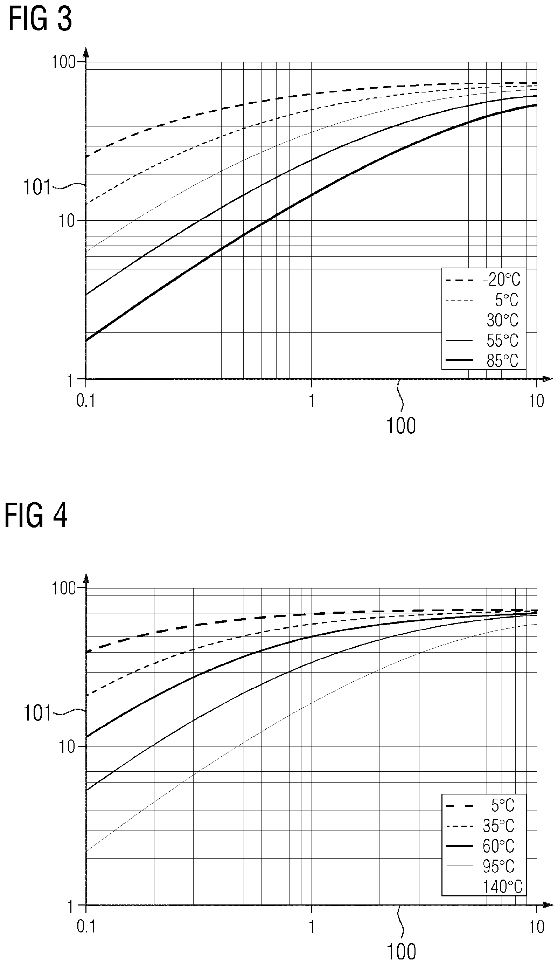

Die Figur 3 zeigt ein Diagramm bezüglich einer spezifischen Beladung eines Metallhydrid-Speichermaterials.

An der Abszisse 100 des Diagramms ist der Druck in der Einheit Mega Pascal (MPa) logarithmisch aufgetragen. An der Ordinate 101 ist die spezifische Beladungskapazität bezüglich Wasserstoff in der Einheit Mol pro Kilogramm (mol/kg) logarithmisch aufgetragen. Die verschieden gestrichelten Linien korrespondieren zu verschieden exemplarischen Temperaturen, vorliegend von oben nach unten zu -20 Grad Celsius, 5 Grad Celsius, 30 Grad Celsius, 55 Grad Celsius und 85 Grad Celsius.

Das Sorptionsspeichermaterial ist vorliegend ein Metallhydrid (MeH), wobei die Zusammensetzung auf den Einsatztemperatur- und Druckbereich abgestimmt werden kann. Das Diagramm zeigt die spezifische Beladung eines bevorzugten Metallhydrids beziehungsweise MeH-Speichermaterials als Funktion von Druck und Temperatur, wobei das Speichermaterial eine massenbezogene Wasserstoffbeladungskapazität von 15 Prozent und eine Desorptionsenthalpie von 21,9 kJ/mol aufweist. Die Verwendung eines solchen Materials ist vorteilhaft für Temperaturen von insbesondere -20 Grad Celsius bis 85 Grad Celsius und Drucke bis 10 MPa (100 bar).

Die Figur 4 ein weiteres Diagramm bezüglich einer spezifischen Beladung eines weiteren Metallhydrid-Speichermaterials.

An der Abszisse 100 des Diagramms ist der Druck in der Einheit Mega Pascal (MPa) logarithmisch aufgetragen. An der Ordinate 101 ist die spezifische Beladungskapazität bezüglich Wasserstoff in der Einheit Mol pro Kilogramm (mol/kg) logarithmisch aufgetragen. Die verschieden gestrichelten Linien korrespondieren zu verschieden exemplarischen Temperaturen, vorliegend von oben nach unten zu 5 Grad Celsius, 35 Grad Celsius, 60 Grad Celsius, 95 Grad Celsius und 140 Grad Celsius.

Das weitere MeH-Speichermaterial weist eine Desorptionsenthalpie von 26 kJ/mol auf. Bei gleicher Sorptionsentropie ist diese somit bei Temperaturen im Bereich 5 Grad Celsius bis beispielsweise 140 Grad Celsius vorteilhaft, wenn Drucke bis 10 MPa verwendet werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1,: Druckbehälter
- 1': Puffertank
- 2: regelbares Ventil
- 3, 3': druckreduzierendes Ventil
- 4, 4': Dreiwegeventil
- 5: Brennstoffzelle
- 6, 6': Dreiwegeventil
- 7, 7': Dreiwegeventil
- 8: regelbares Ventil
- 10: Vorrichtung
- 11: erster Sorptionsspeicher
- 12: zweiter Sorptionsspeicher
- 21: erste Pumpe
- 22: zweite Pumpe
- 27: Wärmeübertrager

- 31: Modul als Wärmesenke
- 32: Modul als Wärmequelle
- 33: Batteriemodul
- 34: Brennstoffzellenmodul
- 35: Wasserversorgungsmodul
- 36: Klimatisierungsmodul
- 37: Klimatisierung
- 41: Dreiwegeventil
- 42: Dreiwegeventil

- L1: erstes Leitungssystem
- L2: zweites Leitungssystem

- 100: Abszisse
- 101: Ordinate

## Patentansprüche

1. Vorrichtung (10) zur Temperierung wenigstens eines Moduls (31, 32) eines wasserstoffbetriebenen Fahrzeuges, umfassend einen Druckbehälter (1) zur Speicherung von Wasserstoff, eine Brennstoffzelle (5) zur Bereitstellung von elektrischer Energie für das Fahrzeug mittels des gespeicherten Wasserstoffes, ein erstes Leitungssystem (L1) für den Wasserstoff sowie ein zweites Leistungssystem (L2) für ein Wärmeübertragungsfluid, wobei die Vorrichtung weiterhin einen ersten und zweiten Sorptionsspeicher (11, 12) für Wasserstoff umfasst, **dadurch gekennzeichnet, dass**
- das erste Leitungssystem (L1) derart ausgebildet ist, dass ein serieller Durchfluss des Wasserstoffes durch den ersten und zweiten Sorptionsspeicher (11, 12) vor der Zuführung des Wasserstoffes zur Brennstoffzelle (5) möglich ist; wobei
- das zweite Leistungssystem (L2) zur thermischen Kopplung des ersten und zweiten Sorptionsspeichers (11, 12) mit dem Modul (31, 32) ausgebildet ist.

2. Vorrichtung (10) gemäß Anspruch 1, **dadurch gekennzeichnet, dass** das erste Leitungssystem (L1) derart ausgebildet ist, dass die Reihenfolge des Durchflusses des Wasserstoffes durch den ersten und zweiten Sorptionsspeicher (11, 12) umschaltbar ist.

3. Vorrichtung (10) gemäß Anspruch 2, **dadurch gekennzeichnet, dass** das erste Leistungssystem (L1) zur Umschaltung der Reihenfolge wenigstens zwei Dreiwegeventile (7, 7') sowie ein zwischen den zwei Dreiwegeventilen (7, 7') angeordnetes regelbares Ventil (8) umfasst.

4. Vorrichtung (10) gemäß einem der vorhergehenden Ansprüche, **dadurch gekennzeichnet, dass** zweite Leistungssystem (L2) derart ausgebildet ist, dass das Modul (31, 32) bezüglich der Sorptionsspeicher als Wärmesenke (31) oder Wärmequelle (32) verwendbar ist.

5. Vorrichtung (10) gemäß einem der vorhergehenden Ansprüche, **dadurch gekennzeichnet, dass** der erste und/oder zweite Sorptionsspeicher (11, 12) als Speichermaterial ein Metallhydrid umfasst/umfassen.

6. Vorrichtung (10) gemäß Anspruch 5, **dadurch gekennzeichnet, dass** das Metallhydrid höchstens eine Desorptionsenthalpie von 23 kJ/mol bei einer Wasserstoffbeladungskapazität von 15 Prozent aufweist.

7. Schienenfahrzeug, welches wasserstoffbetrieben ist, umfassend wenigstens ein zu temperierendes Modul (31, 32), **dadurch gekennzeichnet, dass** das Schienenfahrzeug zur Temperierung des Moduls (31, 32) wenigstens eine Vorrichtung (10) gemäß einem der vorhergehenden Ansprüche umfasst.

8. Schienenfahrzeug gemäß Anspruch 7, **dadurch gekennzeichnet, dass** das Modul (31, 32) mehrere zu temperierende Teilmodule umfasst (33,...,36), und das zweite Leitungssystem (L2) derart ausgebildet ist, dass die Teilmodule (33,...,36) bezüglich des Wärmeübertragungsfluid parallelgeschaltet sind.

9. Schienenfahrzeug gemäß Anspruch 7 oder 8, **dadurch gekennzeichnet, dass** das Modul (31, 32) eine oder mehrere Batterien (33), eine oder mehrere Brennstoffzellen (34), eine oder mehrere Wasserversorgungssysteme (35) eine oder mehrere Klimatisierungsanlagen (36), eine oder mehrere leistungselektronische Konverter, eine oder mehrere Wärmepumpen und/oder eine oder mehrere Widerstandsheizungen umfasst.

10. Verfahren zur Temperierung wenigstens eines Moduls (31, 32) eines wasserstoffbetriebenen Fahrzeuges, **gekennzeichnet dadurch, dass** zur Temperierung des Moduls (31, 32) eine Vorrichtung (10) gemäß einem der Ansprüche 1 bis 6 verwendet wird.

11. Verfahren gemäß Anspruch 10, **gekennzeichnet dadurch, dass** der Wasserstoff so lange über den ersten Sorptionsspeicher (11) geleitet wird, bis die Temperatur des Moduls (31, 32) oberhalb seiner unteren Betriebstemperatur ist oder bis die Brennstoffzelle (5) ihren Betrieb aufnimmt.

12. Verfahren gemäß Anspruch 10 oder 11, **gekennzeichnet dadurch, dass** der Wasserstoff so lange seriell über den ersten und zweiten Sorptionsspeicher (11, 12) geleitet wird, bis die Temperatur des Moduls (31, 32) oberhalb seiner unteren Betriebstemperatur ist oder bis die Brennstoffzelle (5) ihren Betrieb aufnimmt.

13. Verfahren gemäß einem der Ansprüche 10 bis 12, **gekennzeichnet dadurch, dass** die Brennstoffzelle (5) ein Niederlastmodul aufweist, wobei der erste und/oder zweite Sorptionsspeicher (11, 12) wenigstens durch die Abwärme des Niederlastmoduls wenigstes teilweise entladen werden, wobei der dabei bereitgestellte Wasserstoff für den Betrieb des Niederlastmoduls verwendet wird.

14. Verfahren gemäß einem der Ansprüche 10 bis 13, **gekennzeichnet dadurch, dass** das Modul (31, 32) eine Klimatisierungsanlage (36) umfasst, wobei die beim Einspeichern des Wasserstoffes mittels des ersten und/oder zweiten Sorptionsspeicher (11, 12) erzeugte Wärme durch die Klimatisierungsanlage (36) an die Umgebungsluft abgegeben wird.

15. Verfahren gemäß Anspruch 14, **gekennzeichnet dadurch, dass** der erste und zweite Sorptionsspeicher (11, 12) hierbei wechselseitig beladen werden.
